# EUROPÄISCHE PATENTANMELDUNG

(11) **EP 1 014 676 A2**
(43) Veröffentlichungstag der Anmeldung: **28.06.2000**
(21) Anmeldenummer: 99125006.9
(22) Anmeldetag: 15.12.1999
(51) Int. Cl.: H04N 1/00, H04N 1/32

(54) **Verfahren zum Abrufen von Informationen aus dem Internet und von Emails via Fax**

(30) Priorität: 15.12.1998 DE 19857901
(71) Anmelder: DeTeMobil Deutsche Telekom MobilNet GmbH, 53227 Bonn (DE)
(72) Erfinder: Botzet, Roland, 53225 Bonn (DE); Hager, Rolf, Dr., 53424 Remagen-Oedingen (DE); Rass, Jörg, 50226 Frechen-Königsdorf (DE)

(57) **Zusammenfassung**

Die Erfindung betrifft ein Verfahren zum Abrufen von Informationen aus dem Intemet oder einer Email via Fax, das sich durch folgende Schritte auszeichnet: Übertragen einer Nachricht mittels eines Endgeräts eines ersten Kommunikationsnetzes an eine Zentralstelle , wobei die Nachricht wenigstens eine Adresse einer Intemetseite (URL) bzw. eine Email-Adresse und die Rufnummer eines Telefaxanschlusses umfasst; Empfangen der Nachricht in der Zentralstelle, welche über einen Intemet-Zugang bzw. Email-Zugang verfügt; Abrufen der der Adresse der Intemetseite entsprechenden Informationen aus dem Intemet bzw. Abrufen der Email; Aufbereiten der abgerufenen Informationen; und Übertragen der aufbereiteten Informationen über das erste oder ein weiteres Kommunikationsnetz an den angegebenen Telefaxanschluss.

## Beschreibung

Die Erfindung betrifft ein Verfahren zum Abrufen von Informationen aus dem Internet und von Emails via Fax.

Zugang zum Internet oder zum Email Dienst wird in der Regel über ein geeignetes Terminal, z.B. einen Personal Computer, hergestellt. Diese Geräte sind jedoch meist ortsfest angeordnet oder benötigen einen ortsfesten Intemet-Anschluss, so dass ein mobiler Einsatz nicht möglich ist.
Mobiles Intemet-Surfing ist mit einem Laptop möglich, der über ein Mobilfunkendgerät mit dem Internet über einen vorhandenen Internetzugang verbunden wird.

Altemativ werden Mobilfunkendgeräte angeboten, die direkt einen Internetzugang bieten und die Information auf dem Endgerätedisplay darstellen.

Der vorliegenden Erfindung liegt die Aufgabe zugrunde, ein Verfahren zum Abrufen von Informationen aus dem Internet und von Emails vorzuschlagen, bei welchem kein direkter Internet- oder Mailboxzugang gefordert wird, sondern lediglich ein Faxgerät.

Diese Aufgabe wird durch die kennzeichnenden Merkmale der unabhängigen Patentansprüche gelöst.

Die Erfindung beruht darauf, dass zur Abfrage einer Intemet-Information oder Email zunächst eine Nachricht mittels eines Endgeräts eines ersten Kommunikationsnetzes an eine Zentralstelle übertragen wird, wobei die Nachricht für eine Internet-Abfrage wenigstens eine Adresse einer Intemetseite (URL) und die Rufnummer eines Telefaxanschlusses, und für eine Email-Abfrage eine Mailbox-Adresse, Authentifizierungsdaten, Mailbox-Parameter und die Rufnummer eines Telefaxanschlusses umfasst. Die Nachricht wird in der Zentralstelle empfangen, wobei die Zentralstelle über einen Intemet-Zugang bzw. einen Email-Zugang verfügt. Die Zentrale oder eine mit der Zentrale verbundene Einrichtung ruft nun anhand der Adresse der Internetseite die entsprechenden Informationen aus dem Internet ab, bzw. liest die Email-Einträge aus der angegebenen Mailbox. Die abgerufenen Informationen werden aufbereitet und über das erste oder ein weiteres Kommunikationsnetz an den Telefaxanschluss übertragen. Bei geringem Informationsumfang ist eine direkte Übertragung an das Endgerät ebenfalls möglich.

Vorteilhafte Ausführungsformen und Weiterbildungen der Erfindung sind Gegenstand der abhängigen Patentansprüche.

Ein Vorteil der Erfindung ist die mobile Nutzbarkeit von Internet und Email überall dort wo Telefax und Telefon bzw. Mobilfunk verfügbar ist. Die Wahrscheinlichkeit der Verfügbarkeit eines Telefaxes ist relativ hoch, höher als für einen direkten Internet- oder Email-Zugang. Daher ist ein eigener Internet-Anschluss für den Benutzer nicht notwendig.

Ein weiterer Vorteil ist, dass der volle Informationsumfang des Internet (Bilder, Text, ggf. Farbe) genutzt werden kann. Dabei sind alle neueren und viele im Markt befindliche ältere oder Low-End-Mobilfunkendgeräte und Telefaxgeräte zur Verwendung für das erfindungsgemässe Verfahren geeignet.

Email in einer mobilen Umgebung ist ein sehr beschränkter Dienst, sofern kein Laptop zur Verfügung steht, da grosse Dokumente oder Listen ohne Textverarbeitung kaum bearbeitet werden können. Die vorgestellte Erfindung lenkt Email Subject-Listen (Inhaltsverzeichnisse) oder den gesamten, oft viele Seiten umfassenden Inhalt auf das angegebene Telefaxgerät um, so dass ein Arbeiten mit diesen Inhalten möglich wird.

Nachfolgend wird die Erfindung anhand zweier Ausführungsbeispiele unter Bezugnahme auf entsprechende Zeichnungsfiguren näher beschrieben. Dabei ergeben sich aus den Zeichnungen und ihrer Beschreibung weitere Merkmale und Vorteile der Erfindung.
Figur 1 zeigt beispielhaft eine Internet-Abfrage per SMS-Kurznachricht und Telefax;
Figur 2 zeigt beispielhaft eine Email-Abfrage per SMS-Kurznachricht und Telefax.

Die beschriebenen Beispiele beziehen sich auf die Verwendung eines GSM-Mobilfunknetzes für die Datenübertragung zwischen Endgerät und Zentralstelle, und auf die Verwendung eines öffentlichen Festnetzes für die Übertragung zwischen Zentralstelle und Telefaxgerät. Andere Konfigurationen sind möglich.

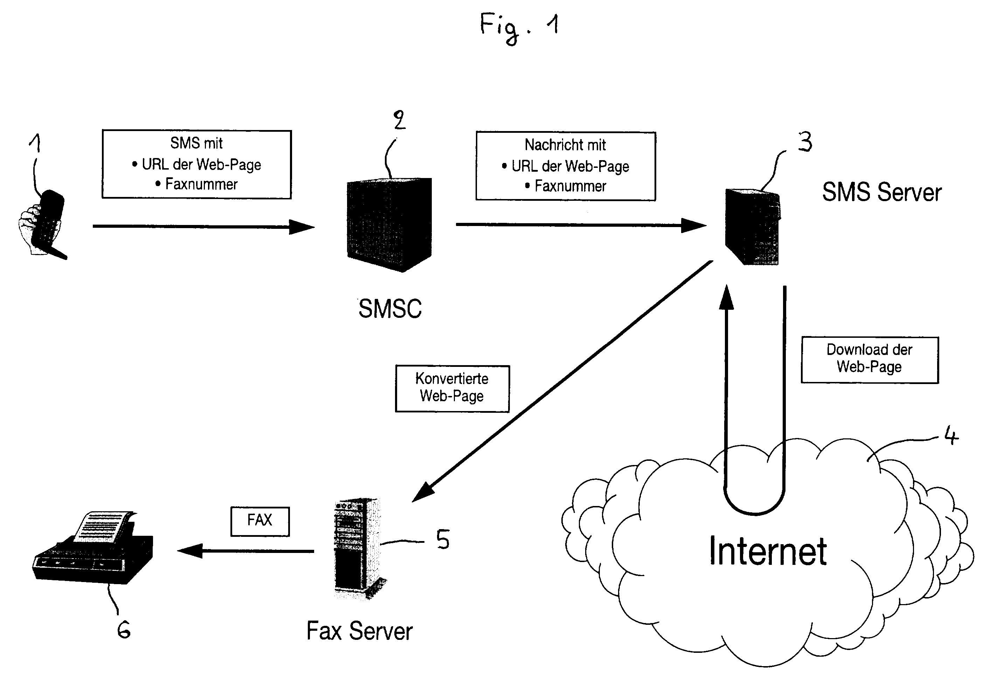

Für eine Abfrage einer gewünschten Intemetseite, gemäss Figur 1, sendet der Benutzer unter Verwendung seines Mobilfunkendgeräts 1 eine Kurznachricht (SMS) über ein Mobilfunknetz an den Mobilfunknetzbetreiber bzw. an die zugeordnete Kurznachrichtenzentrale 2, wobei die Nachricht die Adresse einer Internetseite (URL: Uniform Resource Locator) und die Nummer eines beliebigen Faxgerätes 6 umfasst. Das Format der SMS-Nachricht kann z.B. ein:
<URL der gewünschten Internetseite einschliesslich Parameter><Faxnummer>

Die ausgewählte Kurznachrichtenzentrale 2 reicht die Kurznachricht zu einem SMS-Server 3 weiter, der an das Internet angeschlossen ist. Der SMS-Server 3 kann Teil der Kurznachrichtenzentrale 2 sein oder aber ein unabhängiges Netzelement.

Die gewünschte Internetseite wird vom SMS-Server 3 aus dem Internet 4 geladen, wobei der SMS-Server dazu über Standard-Internetprotokolle die Intemetseite von dem entsprechenden Internet-Rechner abruft.

Die geladene Intemetseite wird zur Faxgenerierung in ein geeignetes elektronisches Datenformat konvertiert, wobei eine Konvertierung für HTML-fähige Faxgeräte nicht notwendig ist, da diese das Internet-Datenformat direkt verarbeiten können.

Die aufbereitete und ggf. konvertierte Intemetseite wird in einen Fax-Server 5 zwischengespeichert und von diesem zum gewünschten Faxgerät 6 übertragen. Die Übertragung erfolgt dabei über das öffentliche Festnetz.

Optional kann von der Kurznachrichtenzentrale 2 eine positive/negative Empfangsquittung über Kurznachricht zum Mobilfunkendgerät 1 geschickt werden, um den Eingang des Auftrags zu bestätigen.

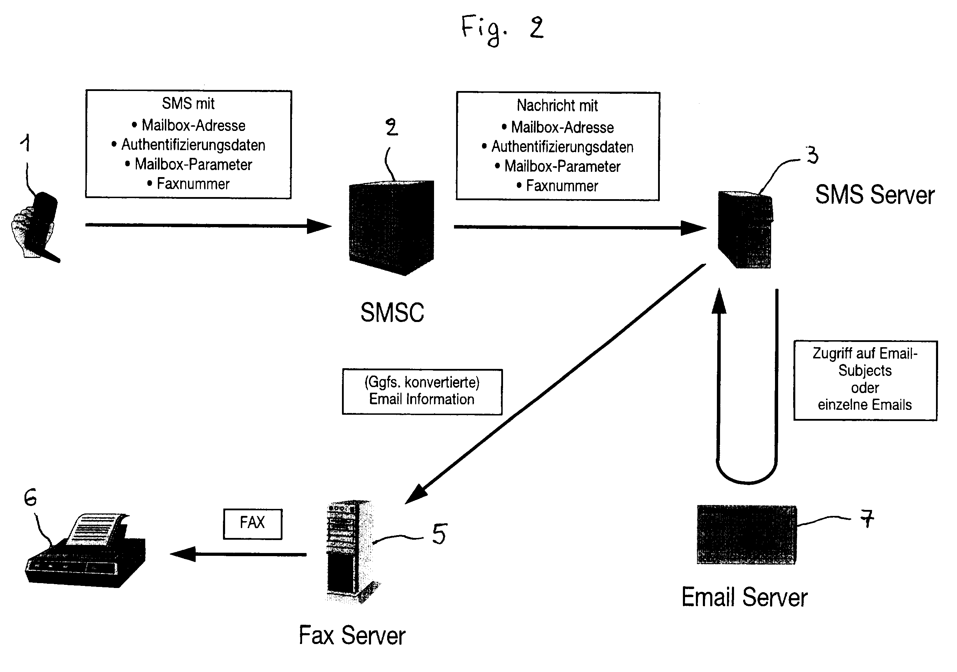

Zur Abfrage einer Email, gemäss Figur 2, sendet der Benutzer unter Verwendung seines Mobilfunkendgeräts 1 eine Kurznachricht (SMS) über ein Mobilfunknetz an den Mobilfunknetzbetreiber bzw. an die zugeordnete Kurznachrichtenzentrale 2, wobei die Kurznachricht die Mailbox-Adresse, die notwendigen
Authentifizierungsdaten, die Mailbox-Parameter und die Nummer eines beliebigen Faxgerätes 6 umfasst. Das Format der SMS-Nachricht kann z.B. ein:
<Mailbox-Adresse><Authentifizierungsdaten><Mailbox-Parameter><Faxnummer>
Die Mailbox kann z.B. ein Standard Email-Host oder eine Unified-Messaging-Box sein etc.

Die gewählte Kurznachrichtenzentrale 2 reicht die Kurznachricht zu einem SMS-Server 3 weiter, auf dem die Email Anwendung läuft, d.h. welcher Emails mit anderen Email-Servern austauschen kann. Der SMS-Server 3 kann Teil der Kurznachrichtenzentrale 2 sein oder aber ein unabhängiges Netzelement.

Die gewünschten Emails oder ein Email-Verzeichnis wird vom SMS-Server 3 von einem der Email Adresse entsprechenden Email-Server 7 abgerufen.

Die geladenen Email-Informationen werden zur Faxgenerierung ggfs. in ein geeignetes elektronisches Datenformat konvertiert.

Die aufbereitete und ggf. konvertierte Email wird in einen Fax-Server 5 zwischengespeichert und von diesem über das öffentliche Festnetz zum gewünschten Faxgerät 6 übertragen.

Für die Übertragung zum gewünschten Faxgerät 6 gibt es wie oben bereits angedeutet verschiedene Möglichkeiten:

Nur die Liste der Email-Subjects (Inhaltsverzeichnis) wird übertragen. Optional kann diese Liste auch über das Mobilfunknetz via Kurznachricht an das Endgerät übertragen werden, sofern dieses dafür geeignet ist.

Eine oder mehrere ausgewählte Emails werden jeweils vollständig oder teilweise an das angegebene Faxgerät übertragen. Optional können diese Vorgänge auch interaktiv über SMS realisiert werden.

## Patentansprüche

1. Verfahren zum Abrufen von Informationen aus dem Internet via Fax,
**gekennzeichnet durch** folgende Schritte:
Übertragen einer Nachricht mittels eines Endgeräts (1) eines ersten Kommunikationsnetzes an eine Zentralstelle (2), wobei die Nachricht wenigstens eine Adresse einer Intemetseite (URL) und die Rufnummer eines Telefaxanschlusses umfasst;
Empfangen der Nachricht in der Zentralstelle (2), welche über einen Internet-Zugang verfügt;
Abrufen der der Adresse der Internetseite entsprechenden Informationen aus dem Internet (4);
Aufbereiten der abgerufenen Informationen; und
Übertragen der aufbereiteten Informationen über das erste oder ein weiteres Kommunikationsnetz an den angegebenen Telefaxanschluss (6).

2. Verfahren nach Anspruch 1, **dadurch gekennzeichnet**, dass die Zentralstelle mit einem Server (3) verbunden ist, der die angegebene Internetseite abruft und einem Fax-Server (5) zur Übermittlung an das Faxgerät (6) zur Verfügung stellt.

3. Verfahren zum Abrufen von Emails via Fax,
**gekennzeichnet durch** folgende Schritte:
Übertragen einer Nachricht mittels eines Endgerätes (1) eines ersten Kommunikationsnetzes an eine Zentralstelle (2), wobei die Nachricht wenigstens eine Mailbox-Adresse und die Rufnummer eines Telefaxanschlusses umfasst;
Empfangen der Nachricht in der Zentralstelle(2), welche über einen Email-Zugang verfügt;
Abrufen der Email gemäss Mailbox-Adresse aus der entsprechenden Mailbox (7);
Aufbereiten der abgerufenen Email; und
Übertragen der aufbereiteten Email über das erste oder ein weiteres Kommunikationsnetz an das Endgerät (1) oder den angegebenen Telefaxanschluss (6).

4. Verfahren nach Anspruch 3, **dadurch gekennzeichnet**, dass die Nachricht zusätzlich Authentifizierungsdaten und Mailbox-Parameter umfasst.

5. Verfahren nach Anspruch 3 oder 4, **dadurch gekennzeichnet**, dass die Zentralstelle mit einem Server (3) verbunden ist, der die Email aus der angegebenen Mailbox (7) abruft und einem Fax-Server (5) zur Übermittlung an das Faxgerät (6) zur Verfügung stellt.

6. Verfahren nach Anspruch 3 - 5, **dadurch gekennzeichnet**, dass nur ein Email Verzeichnis an das Endgerät oder Faxgerät übertragen wird.

7. Verfahren nach Anspruch 3 - 5, **dadurch gekennzeichnet**, dass der Inhalt ausgewählter Emails ganz oder teilweise an das Endgerät oder Faxgerät übertragen werden.

8. Verfahren nach einem der Ansprüche 1 - 7, **dadurch gekennzeichnet**, dass die abgerufenen Informationen zur Faxgenerierung in ein elektronisches Datenformat konvertiert werden.

9. Verfahren nach einem der Ansprüche 1 - 8, **dadurch gekennzeichnet**, dass als erstes und/oder zweites Telekommunikationsnetz ein öffentliches Fernsprechnetz verwendet wird.

10. Verfahren nach einem der Ansprüche 1 - 9, **dadurch gekennzeichnet**, dass als erstes und/oder zweites Telekommunikationsnetz ein öffentliches Mobilfunknetz verwendet wird.

11. Verfahren nach Anspruch 10, **dadurch gekennzeichnet**, dass als Mobilfunknetz ein digitales GSM-Mobilfunknetz verwendet wird.

12. Verfahren nach einem der Ansprüche 1 - 11, **dadurch gekennzeichnet**, als Zentralstelle (2) eine Kurznachrichtenzentrale (SMSC) eines Mobilfunknetzes verwendet wird.

13. Verfahren nach einem der Ansprüche 1 - 12, **dadurch gekennzeichnet**, dass die Nachrichtenübermittlung zwischen Endgerät und Zentralstelle in Form einer SMS-Kurznachricht erfolgt.

14. Verfahren nach einem der Ansprüche 1 - 12, **dadurch gekennzeichnet**, dass die Nachrichtenübermittlung vom Endgerät zur Zentralstelle in Form von DTMF-Tonsignalen erfolgt.

15. Verfahren nach einem der Ansprüche 1 - 14, **dadurch gekennzeichnet**, dass von der Zentralstelle eine positive/negative Empfangsquittung zum Endgerät übermittelt wird.
